(19) Europäisches Patentamt
European Patent Office
Office européen des brevets

(11) **EP 4 431 217 A1**

(12) **EUROPEAN PATENT APPLICATION**
published in accordance with Art. 153(4) EPC

(43) Date of publication:
**18.09.2024   Bulletin 2024/38**

(21) Application number: **22922074.4**

(22) Date of filing: **25.11.2022**

(51) International Patent Classification (IPC):
**B23K 11/14** (2006.01)     **C22C 38/00** (2006.01)
**C22C 38/06** (2006.01)     **C22C 38/60** (2006.01)
**C23C 2/02** (2006.01)       **C23C 2/06** (2006.01)
**C23C 2/40** (2006.01)       **C23C 28/02** (2006.01)
**C25D 5/48** (2006.01)

(52) Cooperative Patent Classification (CPC):
**B23K 11/14; C22C 38/00; C22C 38/06;
C22C 38/60; C23C 2/02; C23C 2/06; C23C 2/40;
C23C 28/02; C25D 5/48**

(86) International application number:
**PCT/JP2022/043505**

(87) International publication number:
**WO 2023/139923 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **19.01.2022   JP 2022006256**

(71) Applicant: **JFE Steel Corporation
Tokyo 100-0011 (JP)**

(72) Inventors:
• **TAKASHIMA, Katsutoshi
Tokyo 100-0011 (JP)**

• **YAMAMOTO, Shunsuke
Tokyo 100-0011 (JP)**
• **KANAZAWA, Tomomi
Tokyo 100-0011 (JP)**
• **HOSHINO, Katsuya
Tokyo 100-0011 (JP)**
• **MATSUDA, Hiroshi
Tokyo 100-0011 (JP)**

(74) Representative: **Hoffmann Eitle
Patent- und Rechtsanwälte PartmbB
Arabellastraße 30
81925 München (DE)**

(54) **PROJECTION-WELDED JOINT AND PROJECTION WELDING METHOD**

(57)     An object is to provide a projection welded joint and a projection welding method.

The present invention is a welded joint formed by performing projection welding on a high-strength coated steel sheet and a nut, in which a content of solid solution Mn in a first region in a surface layer of the steel sheet on an outermost periphery of a weld is 40% or less of a content of solid solution Mn in a second region in a central region in a thickness direction of the steel sheet on the outermost periphery of the weld, and a content of solid solution Mn in a third region in the surface layer of the steel sheet on an innermost periphery of the weld is 40% or less of a content of solid solution Mn in a fourth region in the central region in the thickness direction of the steel sheet on the innermost periphery of the weld.

**(Cont. next page)**

EP 4 431 217 A1

# FIG. 2

(ENLARGED VIEW OF PORTION A)

**Description**

Technical Field

The present invention relates to a projection welded joint and a projection welding method. In particular, the present invention relates to a projection welded joint which can preferably be used as a material for structural parts of an automobile or the like and which is formed by joining a high-strength coated steel sheet and a nut by performing projection welding.

Background Art

Nowadays, in response to growing awareness of environmental issues, $CO_2$ emission regulations are being tightened, and the weight reduction of an automobile body for the purpose of an improvement in fuel efficiency is thus an issue to be addressed in the automobile industrial field. Therefore, a high-strength steel sheet is increasingly being used for automotive parts to decrease the thickness of the automotive parts, and a steel sheet having a tensile strength (TS) of 780 MPa or higher is increasingly being used. In addition, from the viewpoint of corrosion resistance, a corrosion-resistant steel sheet coated with zinc or the like is used for the portion of an automotive part which is exposed to rainwater.

To assemble an automobile, press-formed parts manufactured by performing press forming are fitted together by performing resistance welding in many cases from the viewpoint of cost and manufacturing efficiency. Regarding resistance welding, resistance spot welding is particularly performed to fit together the parts in most processes for assembling an automobile. However, in some cases, for example, in places too narrow for the welding gun of a resistance spot welding machine to enter, bolt fixation is performed to fit together the parts.

In addition, to join a high-strength steel sheet and another kind of material (for example, aluminum, resin, or the like), bolt fixation is increasingly being performed. In such a case, a nut having projection parts is fitted to a high-strength steel sheet by performing resistance welding, and then another sheet (another kind of material described above) is fixed by a bolt for assembly.

In such a case where bolt fixation is performed, if peeling strength between the nut and the high-strength steel sheet in the welded joint formed by performing resistance welding is low, fracture occurs in the automotive part, which is formed by performing bolt fixation, during use. Therefore, it is necessary to ensure the peeling strength. In addition, in the case of bolt fixation, since the fixation position is subjected to stress at all times to maintain the rigidity of the entire automobile body, there is a risk of delayed fracture (hydrogen embrittlement) due to entry of hydrogen from the use environment.

In the related art, for example, Patent Literature 1 and Patent Literature 2 describe means for improving peeling strength of the welded joint formed by performing projection welding on a nut. Patent Literature 1 discloses a technique for improving peeling strength by controlling welding conditions, specifically, by performing up-slope control or preliminary energization in the early stage of an energization step and by increasing welding pressure immediately after energization.

Patent Literature 2 discloses a technique for improving peeling strength by ensuring area of a region having high hardness, specifically, area of a region in which Vickers hardness is 400 Hv or higher in a hardness distribution in a cross section perpendicular to the surface of a steel sheet in a welded heat-affected zone, to satisfy a specified relational expression in relation to the steel sheet thickness.

Citation List

Patent Literature

   PTL 1: Japanese Patent No. 5708350
   PTL 2: Japanese Unexamined Patent Application Publication No. 2010-115678

Summary of Invention

Technical Problem

By using any of the techniques according to the related art described above, there is an increase in peeling strength. However, in the case of the techniques according to Patent Literature 1 and Patent Literature 2, since the steel sheet microstructure of the interface between a high-strength steel sheet and a nut has high hydrogen embrittlement sensitivity, there is a problem of a decrease in delayed fracture resistance in a welded joint formed by welding the steel sheet and the nut. Therefore, it is desirable for the welded joint formed by performing projection welding on a high-strength coated steel sheet and a nut to have not only improved peeling strength but also ensured delayed fracture resistance.

The present invention has been completed in view of the situation described above, and an object of the present invention is to provide a projection welded joint and a projection welding method with which it is possible to improve not only peeling strength but also delayed fracture resistance after having performed projection welding on a high-strength coated steel sheet and a nut.

Solution to Problem

In view of the situation described above, the present inventors diligently repeated investigations and, as a result, obtained knowledge to improve the peeling strength and delayed fracture resistance of a projection welded joint (for example, an automobile member) including a coated steel sheet having a tensile strength of 780 MPa or higher (high-strength coated steel sheet).

That is, it was found that, by using a high-strength coated steel sheet having a softened layer on the surface of the steel sheet, and by performing projection welding on the high-strength coated steel sheet and a nut under optimum welding conditions, it is possible to obtain a projection welded joint excellent in terms of peeling strength and delayed fracture resistance.

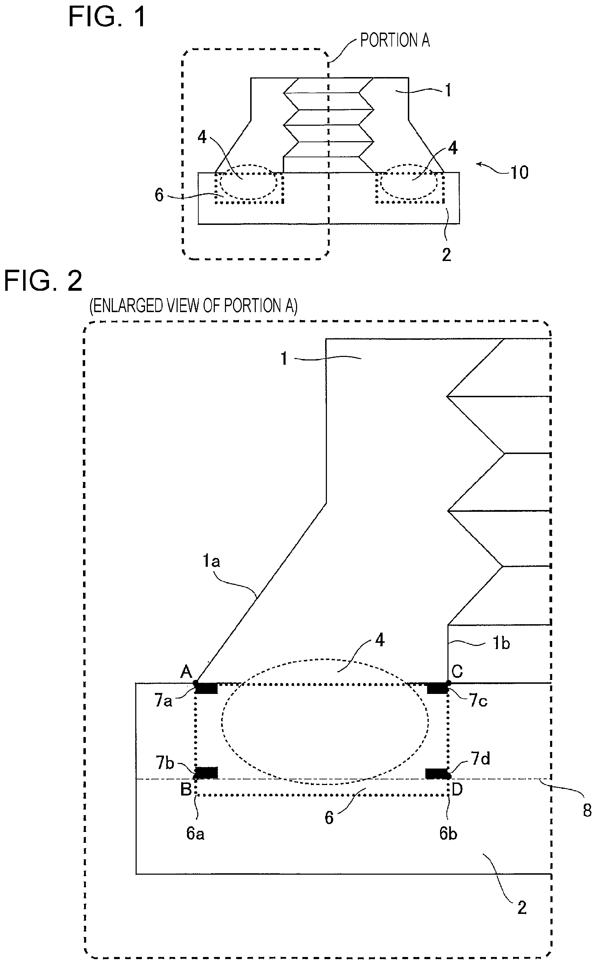

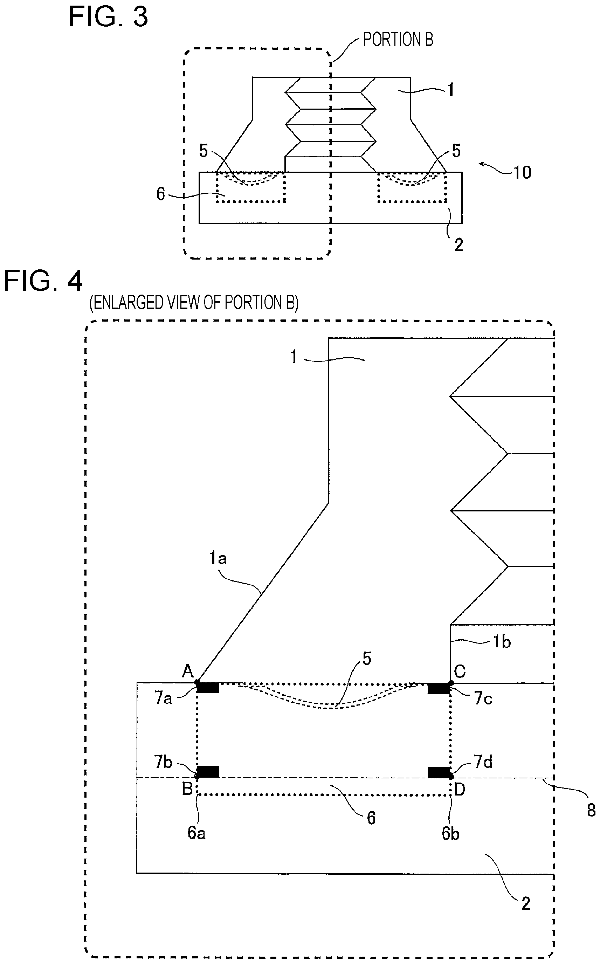

In projection welding, the contact surface between the steel sheet and the nut is melted due to heat generated by performing resistance welding to form a weld (hereinafter, referred to as "projection weld" or "weld"). To achieve sufficient peeling strength of the projection welded joint, it is important to form, as the projection weld, a nugget (refer to Fig. 1) or a strong joint interface (refer to Fig. 3) on the contact surface. However, in the case where the nugget or the strong joint interface is formed on the entirety of the contact surface, a steel sheet microstructure having high hydrogen embrittlement sensitivity is formed on the entire contact surface, there is a decrease in delayed fracture resistance. To resolve such a problem, the surface layer of the steel sheet in the vicinity of the outermost periphery and innermost periphery of a projection weld is made to have a softened layer by controlling the content of solid solution Mn in the surface layer, and a nugget or a strong joint interface is formed in the central portion of the projection weld. Consequently, since a steel sheet microstructure having low hydrogen embrittlement sensitivity is formed at the interface (that is, boundary between the softened layer and the nugget or the strong joint interface), stress concentration in the projection weld is inhibited. As a result, it was found that it is possible to form a projection welded joint having not only improved delayed fracture resistance but also improved peeling strength. In addition, it was found that there are appropriate welding conditions to control the content of solid solution Mn.

The present invention has been completed on the basis of the knowledge described above, and the subject matter of the present invention is as follows.

[1] A projection welded joint, the welded joint being formed by performing projection welding on a high-strength coated steel sheet and a nut,

in which, when a position at a joint interface on an outermost periphery of a weld is defined as a point A, a central position in a thickness direction of the high-strength coated steel sheet on the outermost periphery of the weld is defined as a point B, a position at a joint interface on an innermost periphery of the weld is defined as a point C, a central position in the thickness direction of the high-strength coated steel sheet on the innermost periphery of the weld is defined as a point D,

a region within 50 um from the point A toward a center of the weld along the joint interface and within 5 um from the point A in the thickness direction is defined as a first region,

a region within 50 um from the point B toward the center of the weld in a direction parallel to the joint interface and within 5 um from the point B in the thickness direction is defined as a second region,

a region within 50 um from the point C toward the center of the weld along the joint interface and within 5 $\mu$m from the point C in the thickness direction is defined as a third region, and

a region within 50 $\mu$m from the point D toward the center of the weld in a direction parallel to the joint interface and within 5 $\mu$m from the point D in the thickness direction is defined as a fourth region,

a content of solid solution Mn in the first region is 40% or less of a content of solid solution Mn in the second region, and a content of solid solution Mn in the third region is 40% or less of a content of solid solution Mn in the fourth region,

in which the high-strength coated steel sheet has a chemical composition containing, by mass%,

C: 0.10% to 0.40%,

Si: 0.8% to 2.5%,

Mn: 2.0% to 4.0%,

P: 0.05% or less,
S: 0.004% or less,
Al: 0.01% to 1.00%,
N: 0.010% or less, and
a balance of Fe and incidental impurities, and
in which a precoated layer is provided as a base layer between a coated layer and a base steel sheet of the high-strength coated steel sheet.

[2] The projection welded joint according to item [1], in which the high-strength coated steel sheet has the chemical composition further containing, by mass%, one, two, or more selected from

Nb: 0.050% or less,
Ti: 0.050% or less,
V: 0.05% or less,
Cr: 1.0% or less,
Mo: 0.50% or less,
Cu: 0.50% or less,
Ni: 0.50% or less,
Sb: 0.020% or less,
B: 0.010% or less,
Ca: 0.0050% or less, and
REM: 0.0050% or less.

[3] The projection welded joint according to item [1] or [2], in which the coated layer of the high-strength coated steel sheet is a hot-dip galvanized layer or a hot-dip galvannealed layer.
[4] The projection welded joint according to any one of items [1] to [3], in which the precoated layer of the high-strength coated steel sheet is an Fe-based electroplated layer having a coating weight per side of 0.5 $g/m^2$ or more.
[5] The projection welded joint according to any one of items [1] to [4], in which a tensile strength of the high-strength coated steel sheet is 780 MPa or higher.
[6] A projection welding method for the projection welded joint according to any one of items [1] to [5], the projection welding method including a main energizing process,

in which, when the high-strength coated steel sheet and the nut are clamped between a pair of electrodes and energized while being pressurized so as to be joined by performing resistance welding,
an average welding current Iw (kA) and an energizing time Tw (s) of the resistance welding satisfy relational expression (1).

$$5 \leq Iw \leq 2.2/Tw \cdots (1)$$

[7] The projection welding method according to item [6], the method further including a post-energizing process following the main energizing process,

in which the post-energizing process includes
a cooling step in which cooling is performed for a cooling time of 0.02 s or more after the main energizing process and
an energizing step following the cooling step in which an average welding current Iw2 (kA) and an energizing time Tw2 (s) of the resistance welding satisfy relational expression (2) and relational expression (3):

$$0 < Iw2 \leq 0.5/Tw2 \cdots (2)$$

$$Iw2 < Iw \cdots (3)$$

Here, in relational expression (2) and relational expression (3), Iw denotes the average welding current (kA) in the main energizing process, Iw2 denotes the average welding current (kA) in the post-energizing process, and Tw2 denotes the energizing time (s) in the post-energizing process.

Here, in the present invention, the expression "excellent peeling strength" denotes a case where peeling strength (FL), which is determined by performing an indentation peeling test in accordance with JIS B 1196:2001 as described in EXAMPLES below, is 7.0 kN or higher.

In the present invention, the expression "excellent delayed fracture resistance" denotes, as described in EXAMPLES below, a case where when, after the obtained projection welded joint has been immersed in a hydrochloric acid solution (pH = 1.0) at room temperature with a load of (0.85 × FL) being applied via a bolt, whether or not peeling occurs between the nut and the high-strength coated steel sheet is checked and peeling does not occur between the nut and the high-strength coated steel sheet after 100 hours or more has elapsed, and a case where when, after the obtained projection welded joint has been immersed in a hydrochloric acid solution (pH = 1.0) at room temperature with a load of (0.65 × FL) being applied via a bolt, whether or not peeling occurs between the nut and the high-strength coated steel sheet is checked and peeling does not occur between the nut and the high-strength coated steel sheet after 100 hours or more has elapsed.

As the projection welded joint described above, a projection welded joint manufactured by performing projection welding on, for example, an M6 nut and a steel sheet is used. Here, the expression "M6 nut" denotes a nut to be screwed together with a bolt having a thread part having a nominal diameter (maximum diameter or the outer diameter of a thread ridge) of 6 mm. Here, the expression "MO" denotes the "nominal size of a screw" for a metric screw thread conforming to the prescription in JIS B 0205:2001 and consists of a combination of the character "M" and the maximum diameter of the thread part, that is, ○ mm. Advantageous Effects of Invention

According to the present invention, it is possible for a projection welded joint to have not only excellent peeling strength but also excellent delayed fracture resistance.

Brief Description of Drawings

[Fig. 1] Fig. 1 is a schematic sectional view of a projection welded joint according to an embodiment of the present invention.
[Fig. 2] Fig. 2 is an enlarged sectional view of a projection weld of the projection welded joint illustrated in Fig. 1 and a portion in the vicinity thereof.
[Fig. 3] Fig. 3 is a schematic sectional view of a projection welded joint according to another embodiment of the present invention.
[Fig. 4] Fig. 4 is an enlarged sectional view of a projection weld of the projection welded joint illustrated in Fig. 3 and a portion in the vicinity thereof.
[Fig. 5] Fig. 5 is a schematic front view of a projection welded joint according to the present invention in the state before welding is performed.

Description of Embodiments

Hereafter, the present invention will be described. Note that the present invention is not limited to the embodiments below.

[Projection welded joint]

First, the projection welded joint according to the present invention will be described with reference to Fig. 1 to Fig. 4.

Fig. 1 to Fig. 4 are the sectional views in the thickness direction of the projection welded joint 10 according to the present invention. Fig. 1 and Fig. 2 illustrate, as an example, a welded joint in which a projection weld having a lump shape is formed on the contact surface between the steel sheet and the nut. Fig. 3 and Fig. 4 illustrate, as another example, a welded joint in which a projection weld having a film shape is formed on the contact surface between the steel sheet and the nut. Here, Fig. 1 to Fig. 4 all illustrate the nut 1 and the high-strength coated steel sheet 2 in a state of being joined.

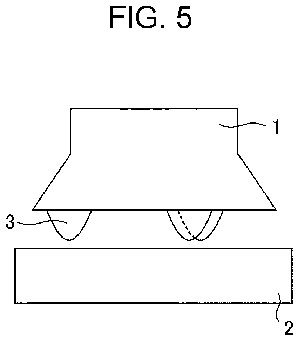

The present invention is a projection welded joint 10 (hereinafter, referred to as "welded joint") which is manufactured by joining a nut 1 to a high-strength coated steel sheet 2 by performing projection welding. As the high-strength coated steel sheet 2, a coated steel sheet having the chemical composition described below is used. Here, in the examples illustrated in Fig. 1 to Fig. 4, the coated layer of the high-strength coated steel sheet 2 is not illustrated. As illustrated in the figures, a projection weld (hereinafter, referred to as "weld") 6 described below is formed on a joint surface between the high-strength coated steel sheet 2 and the projection parts (refer to reference sign 3 in Fig. 5) of the nut 1. Here, the projection parts described above are protrusions to be compressed onto the steel sheet when welding is performed.

[Projection weld]

Element distribution in the weld of the welded joint according to the present invention will be described in detail in accordance with Fig. 2 and Fig. 4. Fig. 2 is an enlarged view of the portion A illustrated in Fig. 1 and is a sectional view in the thickness direction illustrating the weld 6 and a portion in the vicinity thereof. Fig. 4 is an enlarged view of the portion B illustrated in Fig. 3 and is a sectional view in the thickness direction illustrating the weld 6 and a portion in the vicinity thereof.

In the case of the example illustrated in Fig. 2, the weld 6 having a joint region in a lump shape 4 (synonymous with a nugget, hereafter, referred to as "nugget") is formed on the contact surface between the high-strength coated steel sheet 2 and the nut 1. In the weld 6 illustrated in Fig. 2, the nugget 4 is formed in the central portion of the weld 6, and a heat-affected zone having a ring shape is formed through solid-phase welding in a region outside the nugget 4.

In the case of the example illustrated in Fig. 4, the weld 6 having a joint region in a film shape 5 (hereafter, referred to as "strong joint interface") is formed on the contact surface between the high-strength coated steel sheet 2 and the nut 1. In the weld 6 illustrated in Fig. 4, the strong joint interface 5 is formed except both edges of the contact surface between the high-strength coated steel sheet and the nut, and a heat-affected zone is formed in the outer peripheral portion of the strong joint interface 5.

Note that the same effect is obtained in each of the weld 6 illustrated in Fig. 2 and the weld 6 illustrated in Fig. 4.

As described above, in the case where the nugget 4 or the strong joint interface 5 is formed on the entire contact surface between the nut 1 and the high-strength coated steel sheet 2, there is a decrease in delayed fracture resistance. Therefore, the present inventors conducted close investigations regarding regions in the vicinity of the outermost periphery 6a and innermost periphery 6b of the weld 6 and, as a result, found that controlling the content of solid solution Mn in the surface layer of a steel sheet is effective for preventing a decrease in delayed fracture resistance. That is, it was found that, by forming a softened layer by controlling the content of solid solution Mn to be within an appropriate range in the surface layer of the steel sheet in the vicinity of the outermost periphery 6a and innermost periphery 6b of the weld 6, the welded joint 10 has not only excellent peeling strength but also excellent delayed fracture resistance.

Here, the expression "outermost periphery 6a of the weld 6" denotes, as illustrated in Fig. 2 and Fig. 4, the boundary between the weld 6 and the base steel sheet of the high-strength coated steel sheet 2 on the outer edge side of a tapered portion 1a of the nut 1. The expression "innermost periphery 6b of the weld 6" denotes the boundary between the weld 6 and the base steel sheet of the high-strength coated steel sheet 2 on a screw hole 1b side of the nut 1.

Specifically, in the case of the example in which the weld 6 is a joint region having a lump shape as illustrated in Fig. 2, a position at the joint interface on the outermost periphery 6a of the weld 6 is defined as a point A, a central position 8 in the thickness direction of the high-strength coated steel sheet 2 on the outermost periphery 6a of the weld 6 is defined as a point B, a position at the joint interface on the innermost periphery 6b of the weld 6 is defined as a point C, and a central position 8 in the thickness direction of the high-strength coated steel sheet 2 on the innermost periphery 6b of the weld 6 is defined as a point D.

A region within 50 um from the point A described above toward the center of the weld (the center of the weld 6) along the joint interface and within 5 um from the point A in the thickness direction is defined as "first region 7a". In addition, a region within 50 um from the point B described above toward the center of the weld in a direction parallel to the joint interface and within 5 um from the point B in the thickness direction is defined as "second region 7b". In addition, a region within 50 um from the point C described above toward the center of the weld along the joint interface and within 5 um from the point C in the thickness direction is defined as "third region 7c". In addition, a region within 50 um from the point D described above toward the center of the weld in a direction parallel to the weld interface and within 5 um from the point D in the thickness direction is defined as "fourth region 7d".

The second region 7b is located immediately below the first region 7a, and the fourth region 7d is located immediately below the third region 7c. Expressions "within 5 um from the point A in the thickness direction" and "within 5 um from the point C in the thickness direction" above denote a region within 5 um from the point A or the point C toward the central position 8 in the thickness direction. Expressions "within 5 um from the point B in the thickness direction" and "within 5 um from the point D in the thickness direction" above denote a region within 5 um from the point B or the point D toward the weld interface in the thickness direction.

Also in the case of the example in which the weld 6 is a joint region having a film shape as illustrated in Fig. 4, the first region 7a to the fourth region 7d are defined in the same manner as in the case of Fig. 2.

In the present invention, the content (mass%) of solid solution Mn in the first region 7a is set to be 40% or less of the content (mass%) of solid solution Mn in the second region 7b, and the content (mass%) of solid solution Mn in the third region 7c is set to be 40% or less of the content (mass%) of solid solution Mn in the fourth region 7d.

To achieve excellent peeling strength and excellent delayed fracture resistance, it is necessary that, on the outermost periphery 6a and innermost periphery 6b of the weld 6, the ratio of the content of solid solution Mn in the surface layer of the steel sheet to the content of solid solution Mn in the central position 8 in the thickness direction (position located at 1/2 of the thickness t) be 40% or less. In the case where such a ratio is more than 40%, an excessive amount of Mn is segregated in the vicinity of grain boundaries and, as a result, large local plastic deformation occurs, which results in a decrease in delayed fracture resistance. Moreover, since there is an increase in the degree of stress concentration due to a decrease in toughness, there is a decrease in peeling strength. For these reasons, the ratio described above is set to be 40% or less. It is preferable that the ratio be 35% or less, more preferably less than 20%, or even more preferably 18% or less.

There is no particular limitation on the lower limit of the ratio. From the viewpoint of ensuring strength of the base steel sheet, it is preferable that the ratio be 1% or more, more preferably 2% or more, or even more preferably 7% or more.

In the present invention, the content of solid solution Mn described above may be determined by using the method described in EXAMPLES below.

[High-strength coated steel sheet]

Regarding the welded joint according to the present invention, the reasons for the limitations on the chemical composition of the base steel sheet of the high-strength coated steel sheet will be described. This chemical composition is preferable as the chemical composition of a coated steel sheet having a tensile strength of 780 MPa or higher. Here, in the description below, "%" used when describing a chemical composition denotes mass%, unless otherwise noted.

C: 0.10% to 0.40%

C is an element which is effective for increasing peeling strength. In the case where the C content is less than 0.10%, since there is a decrease in the hardness of martensite after projection welding has been performed, there is a decrease in peeling strength. Therefore, the C content is set to be 0.10% or more or preferably 0.12% or more. On the other hand, in the case where the C content is more than 0.40%, since there is insufficient self-tempering of martensite after projection welding has been performed, there is a marked decrease in delayed fracture resistance. Therefore, the C content is set to be 0.40% or less or preferably 0.38% or less.

Si: 0.8% to 2.5%

Since Si is effective for alleviating the distribution of hardness in the thickness direction of a steel sheet by alleviating the segregation of Mn, Si improves projection weldability. To obtain such an effect, it is necessary that the Si content be 0.8% or more. It is preferable that the Si content be 0.9% or more. However, in the case where the Si content is excessively high, since there is an increase in temper softening resistance, there is a decrease in delayed fracture resistance after projection welding has been performed. Therefore, the Si content is set to be 2.5% or less or preferably 2.2% or less.

Mn: 2.0% to 4.0%

Mn contributes to increasing peeling strength through solid solution strengthening and the formation of martensite at a joint interface. To obtain such an effect, it is necessary that the Mn content be 2.0% or more. It is preferable that the Mn content be 2.2% or more. On the other hand, in the case where the Mn content is excessively high, when hydrogen enters a steel sheet on the outer periphery and inner periphery of the weld, since there is an increase in sliding constraint at grain boundaries, a crack tends to grow at grain boundaries. Consequently, there is a decrease in delayed fracture resistance after projection welding has been performed. In addition, there is an increase in the content of solid solution Mn after projection welding has been performed. Therefore, the Mn content is set to be 4.0% or less. It is preferable that the Mn content be 3.7% or less.

P: 0.05% or less

In the case where the P content is excessively high, since inter granular embrittlement occurs due to segregation at grain boundaries becoming marked, there is a decrease in peeling strength. Therefore, the P content is set to be 0.05% or less. It is preferable that the P content be 0.04% or less. Although there is no particular limitation on the lower limit of the P content, there is an increase in steel making costs in the case where an attempt is made to achieve ultra-low P content. Therefore, it is preferable that the P content be 0.005% or more.

S: 0.004% or less

In the case where the S content is high, since large amounts of sulfides such as MnS are formed, there is a decrease in delayed fracture resistance after projection welding has been performed due to MnS becoming a starting point at which a crack is generated at the time of hydrogen entry. Therefore, the upper limit of the S content is set to be 0.004%. It is preferable that the S content be 0.003% or less. Although there is no particular limitation on the lower limit of the S content, there is an increase in steel making costs in the case where an attempt is made to achieve ultra-low S content. Therefore, it is preferable that the S content be 0.0002% or more.

Al: 0.01% to 1.00%

Al is an element which is necessary for deoxidization, and it is necessary that the Al content be 0.01% or more to obtain such an effect. On the other hand, in the case where the Al content is excessively high, since there is an increase in temper softening resistance, there is a decrease in delayed fracture resistance. Therefore, the upper limit of the Al content is set to be 1.00%. It is preferable that the Al content be 0.80% or less.

N: 0.010% or less

Since N forms nitrides having a large grain size and causes a decrease in peeling strength after projection welding has been performed, it is necessary that the N content be as low as possible. Since such a tendency becomes marked in the case where the N content is more than 0.010%, the N content is set to be 0.010% or less. It is preferable that the N content be 0.0075% or less. Although there is no particular limitation on the lower limit of the N content, it is preferable that the N content be 0.0002% or more to inhibit an increase in cost.

The coated steel sheet used in the present invention has the chemical composition containing the elements described above and a balance of Fe and incidental impurities. Examples of the incidental impurities include Co, Sn, Zn, and the like. The acceptable ranges of the contents of these elements are Co: 0.05% or less, Sn: 0.01% or less, and Zn: 0.01% or less.

In addition, in the present invention, it is acceptable that Ta, Mg, and Zr are added in an amount of 0.01% or less each, because this does not cause a decrease in the effect of the present invention described above.

In the present invention, the chemical composition described above is the base chemical composition of the coated steel sheet. In the present invention, in addition to the chemical composition described above, one, two, or more selected from Nb, Ti, V, Cr, Mo, Cu, Ni, Sb, B, Ca, and REM may be added as needed. Here, since the elements described below, that is, Nb, Ti, V, Cr, Mo, Cu, Ni, Sb, B, Ca, and REM, may be added as needed, the content of each of these elements may be 0%.

Nb: 0.050% or less

Nb forms carbonitrides having a small grain size and thus improves peeling strength and delayed fracture resistance after projection welding has been performed. In the case where Nb is added to obtain such an effect, it is preferable that the Nb content be 0.005% or more. On the other hand, in the case where the Nb content is high, there is a marked decrease in uniform elongation, and slab cracking occurs after a continuous casting process. Therefore, in the case where Nb is added, the Nb content is set to be 0.050% or less. It is preferable that the Nb content be 0.045% or less or more preferably 0.040% or less.

Ti: 0.050% or less

Ti forms carbonitrides having a small grain size and thus improves peeling strength and delayed fracture resistance after projection welding has been performed. In the case where Ti is added to obtain such an effect, it is preferable that the Ti content be 0.005% or more. On the other hand, in the case where the Ti content is high, there is a marked decrease in uniform elongation. Therefore, in the case where Ti is added, the Ti content is set to be 0.050% or less. It is preferable that the Ti content be 0.045% or less.

V: 0.05% or less

V forms carbonitrides having a small grain size and thus improves peeling strength and delayed fracture resistance after projection welding has been performed. In the case where V is added to obtain such an effect, it is preferable that the V content be 0.005% or more. On the other hand, in the case where the V content is high and more than 0.05%, there is only a slight increase in the effect of increasing strength in relation to an increase in the V content. In addition,

9

there is also an increase in alloy cost. Therefore, in the case where V is added, it is preferable that the V content be 0.05% or less.

Cr: 1.0% or less

Cr is an element which contributes to increasing peeling strength, because Cr tends to form martensite in a projection weld. In the case where Cr is added to obtain such an effect, it is preferable that the Cr content be 0.05% or more. On the other hand, in the case where the Cr content is more than 1.0%, a surface defect tends to occur. Therefore, in the case where Cr is added, the Cr content is set to be 1.0% or less. It is preferable that the Cr content be 0.8% or less.

Mo: 0.50% or less

Mo, like Cr, is an element which contributes to increasing peeling strength, because Mo tends to form martensite in a projection weld. Moreover, Mo is an element which contributes to improving delayed fracture resistance by increasing hydrogen overpotential. In the case where Mo is added to obtain such effects, it is preferable that the Mo content be 0.05% or more. It is more preferable that the Mo content be 0.06% or more. On the other hand, in the case where the Mo content is more than 0.50%, such effects become saturated, and there is only an increase in cost. Therefore, in the case where Mo is added, the Mo content is set to be 0.50% or less. It is preferable that the Mo content be 0.42% or less.

Cu: 0.50% or less

In the case where Cu is added, Cu improves delayed fracture resistance by increasing hydrogen overpotential. In the case where Cu is added to obtain such an effect, it is preferable that the Cu content be 0.005% or more. On the other hand, in the case where the Cu content is more than 0.50%, such an effect becomes saturated, and a surface defect tends to occur due to Cu. Therefore, in the case where Cu is added, the Cu content is set to be 0.50% or less.

Ni: 0.50% or less

Ni is, like Cu, an element which improves delayed fracture resistance by increasing hydrogen overpotential. In the case where Ni is added to obtain such an effect, it is preferable that the Ni content be 0.005% or more. In addition, since Ni is effective for inhibiting a surface defect due to Cu from occurring in the case where Ni is added in combination with Cu, Ni is effective in the case where Cu is added. On the other hand, in the case where the Ni content is more than 0.50%, such effects become saturated. Therefore, in the case where Ni is added, it is preferable that the Ni content be 0.50% or less.

Sb: 0.020% or less

Since Sb is effective for inhibiting the formation of a decarburized layer in the surface layer of a steel sheet, an electric potential distribution on the steel sheet surface becomes uniform in an aqueous solution, which results in an improvement in delayed fracture resistance. In the case where Sb is added to obtain such an effect, it is preferable that the Sb content be 0.001% or more. On the other hand, in the case where the Sb content is more than 0.020%, since there is an increase in rolling load when a steel sheet is manufactured, there is a decrease in productivity. Therefore, in the case where Sb is added, it is preferable that the Sb content be 0.020% or less.

B: 0.010% or less

Since B improves hardenability and tends to form martensite in a weld, B contributes to increasing peeling strength. In the case where B is added to obtain such an effect, it is preferable that the B content be 0.0002% or more. On the other hand, in the case where the B content is more than 0.010%, such an effect becomes saturated. Therefore, in the case where B is added, the B content is set to be 0.010% or less. It is preferable that the B content be 0.008% or less.

Ca: 0.0050% or less, REM: 0.0050% or less

Ca and REM (rare earth metals), which are elements that contribute to improving delayed fracture resistance through the spheroidization of sulfides, may be added as needed. In the case where Ca and REM are added to obtain such an effect, it is preferable that the content of each of Ca and REM be 0.0005% or more. On the other hand, in the case where the content of each of Ca and REM is more than 0.0050%, such an effect becomes saturated. Therefore, in the case where Ca and REM are added, the content of each of Ca and REM is set to be 0.0050% or less.

In the present invention, from the viewpoint of application to structural parts of an automobile or the like as described above, it is preferable that the tensile strength of the high-strength coated steel sheet be 780 MPa or higher or more preferably 1000 MPa or higher.

[Steel sheet microstructure of high-strength coated steel sheet]

In the present invention, there is no particular limitation on the steel sheet microstructure of the high-strength coated steel sheet (steel sheet microstructure of the base steel sheet) described above. However, from the viewpoint of application of the welded joint according to the present invention to the structural parts of an automobile or the like, it is preferable that the steel sheet microstructure of the base steel sheet include, in terms of volume fraction, 3% to 30% of retained austenite. This is because, when a steel sheet having a tensile strength of 780 MPa or higher is used, press formability becomes an issue. Therefore, it is preferable that the steel sheet microstructure of the base steel sheet include retained austenite, with which it is possible to achieve a high level of uniform elongation due to stress-induced transformation, in the amount described above in terms of volume fraction.

[Kind of coated layer of high-strength coated steel sheet]

It is preferable that the kind of the coated layer formed on the surface of the base steel sheet of the high-strength coated steel sheet described above be a galvanized layer. In particular, from the viewpoint of application to an automobile, the high-strength coated steel sheet may be a hot-dip galvanized steel sheet (GI), which is manufactured by performing a hot-dip galvanizing treatment described below to form a galvanized layer on the surface of the base steel sheet. In addition, the high-strength coated steel sheet may be a hot-dip galvannealed steel sheet (GA), which is manufactured by performing an alloying treatment described below on the hot-dip galvanized steel sheet described above to form a hot-dip galvannealed layer on the surface of the base steel sheet.

It is preferable that the coating weight per side of the galvanized layer be 25 $g/m^2$ or more and 80 $g/m^2$ or less. In the case where the coating weight per side of the galvanized layer is 25 $g/m^2$ or more, there is an improvement in corrosion resistance. Along with this, it is easy for the coating weight to be controlled. In addition, in the case where the coating weight per side of the galvanized layer is 80 $g/m^2$ or less, it is possible to achieve good coating adhesiveness. It is more preferable that the coating weight described above be 30 $g/m^2$ or more and 75 $g/m^2$ or less.

Although there is no particular limitation on the chemical composition of a hot-dip galvanizing bath, particularly from the viewpoint of application to an automobile, it is preferable that the hot-dip galvanizing bath contain Al, Zn, and incidental impurities. The Al content in the bath is set to be 0.05 mass% or more and 0.25 mass% or less. In the case where the Al content in the bath is 0.05 mass% or more, since it is possible to inhibit bottom dross from being generated, it is possible to inhibit a defect from being generated due to dross adhering to a steel sheet. In the case where the Al content in the bath is 0.25 mass% or less, since it is possible to inhibit an increase in the amount of top dross, it is possible to inhibit a defect from being generated due to dross adhering to a steel sheet, and there is a decrease in cost. It is more preferable that the Al content in the bath described above be 0.08 mass% or more and 0.22 mass% or less. Here, there is no particular limitation on the other conditions applied for a hot-dip galvanizing treatment. For example, particularly from the viewpoint of application to an automobile, it is preferable that the hot-dip galvanizing treatment be performed by dipping a steel sheet having a steel sheet temperature of 440°C to 550°C in the hot-dip galvanizing bath having a bath temperature of 440°C to 500°C.

After a hot-dip galvanizing treatment has been performed, an alloying treatment may be performed on the galvanized coated layer at a temperature of 450°C to 600°C. By performing an alloying treatment at a temperature of 450°C to 600°C, since the Fe concentration in the coated layer becomes 7% to 15%, there is an improvement in coating adhesiveness and after-coating corrosion resistance. In the case where the treatment temperature is lower than 450°C, since alloying does not sufficiently progress, there is a decrease in a sacrificial anticorrosive effect and a decrease in slidability. In the case where the treatment temperature is higher than 600°C, since alloying markedly progresses, there is a decrease in powdering resistance.

In the present invention, the high-strength coated steel sheet has a precoated layer at an interface between the coated layer and the base steel sheet. The precoated layer is formed by performing a precoating treatment, in which a coated layer (base layer for a galvanized layer) is formed on the surface of the base steel sheet before a hot-dip galvanizing treatment is performed. It is preferable that the precoated layer be an Fe-based electroplated layer. Examples of an alloy for an Fe-based electroplated layer which may be used include, in addition to pure Fe, an Fe-B alloy, an Fe-C alloy, an Fe-P alloy, an Fe-N alloy, an Fe-O alloy, an Fe-Ni alloy, an Fe-Mn alloy, an Fe-Mo alloy, an Fe-W alloy, and the like. There is no particular limitation on the chemical composition of the Fe-based electroplated layer. However, particularly from the viewpoint of application to an automobile, it is preferable that the chemical composition contain one, two, or more selected from the group consisting of B, C, P, N, O, Ni, Mn, Mo, Zn, W, Pb, Sn, Cr, V, and Co in a total amount of 10% or less with a balance of Fe and incidental impurities. In the case where the total amount of the elements other than Fe is 10% or less, since it is possible to inhibit a decrease in electrolysis efficiency, it is possible to form an Fe-based electroplated layer at low cost. It is more preferable that the total amount of the elements other than Fe described above be 8% or less, and it is preferable that the total amount be 0.1% or more.

It is preferable that the coating weight per side of the Fe-based electroplated layer described above be 0.5 g/m² or more. In the case where the coating weight is 0.5 g/m², since the Fe-based electroplated layer functions as a softened layer, it is possible to alleviate stress applied to the surface of the steel sheet when welding is performed, which results in a decrease in residual stress in the weld. Along with this, since it is possible to allow diffusible hydrogen to efficiently escape from the surface of the steel sheet, there is an improvement in delayed fracture resistance. It is more preferable that the coating weight per side of the Fe-based electroplated layer be 1.0 g/m² or more. Here, although there is no particular limitation on the upper limit of the coating weight per side of the Fe-based electroplated layer, it is preferable that the coating weight per side of the Fe-based electroplated layer be 60 g/m² or less from the viewpoint of cost. It is more preferable that the coating weight be 50 g/m² or less, even more preferably 40 g/m² or less, or even much more preferably 30 g/m² or less.

In the present invention, the thickness of the Fe-based electroplated layer is determined by using the following method. A sample having a size of 10 mm × 15 mm taken from a high-strength hot-dip galvanized steel sheet, which is manufactured by performing an alloying treatment on a hot-dip galvanized steel sheet, is embedded in a resin to form an embedded sample for sectional observation. Three randomly selected positions in one cross section of the sample are observed by using a scanning electron microscope (SEM) with an acceleration voltage of 15 kV at a magnification of 2000 to 10000 times depending on the thickness of the Fe-based electroplated layer. After having calculated the average value of the thicknesses of the three positions, the average value is converted into the coating weight per side of the Fe-based electroplated layer by multiplying the average value by the specific gravity of iron.

Hereafter, preferable manufacturing conditions in the case where the precoated layer described above is the Fe-based electroplated layer will be described.

First, by performing an Fe-based electroplating treatment on the surface of a high-strength cold rolled steel sheet before annealing, an Fe-based electroplated steel sheet before annealing is manufactured. There is no particular limitation on the method used for an Fe-based electroplating treatment. For example, as an Fe-based electroplating bath, any one of a sulfuric acid bath and a hydrochloric acid bath or a mixture thereof may be used. Here, an Fe-based electroplating treatment may also be performed without performing an oxidizing treatment in a preheating furnace or the like on a high-strength cold rolled steel sheet before annealing. It is preferable that the content of Fe ions in the Fe-based electroplating bath before energizing is started be 1.0 mol/L or more in the form of $Fe^{2+}$. In the case where the content of Fe ions in the Fe-based electroplating bath is 1.0 mol/L or more in the form of $Fe^{2+}$, it is possible to achieve a sufficient coating weight of Fe.

In addition, the Fe-based electroplating bath may contain conductivity auxiliary agents such as sodium sulfate, potassium sulfate, and the like as additives or impurities in addition to Fe ions and alloying elements such as B, C, P, N, O, Ni, Mn, Mo, Zn, W, Pb, Sn, Cr, V, Co, and the like. Here, the metal elements may be contained in the form of metal ions, and nonmetal elements may be contained in the form of parts of boric acid, phosphoric acid, nitric acid, organic acid, and the like. In addition, a ferrous sulfate plating solution may contain conductivity auxiliary agents such as sodium sulfate, potassium sulfate, and the like, chelating agents, and pH buffering agents.

There is no particular limitation on the other conditions applied to the Fe-based electroplating bath. However, from the viewpoint of forming the Fe-based electroplated layer described above, it is preferable that the bath temperature be 30°C or higher in consideration of retaining the bath temperature at a constant temperature. Although there is no particular limitation on the pH of the Fe-based electroplating bath, it is preferable that the pH be 3.0 or less in consideration of the electrical conductivity of the Fe-based electroplating bath. Although there is no particular limitation on the current density, the current density is set to be 10 to 150 A/dm² from the consideration of manufacturing costs. The sheet passing speed may be 5 mpm or higher and 150 mpm or lower. This is because there is a deterioration in productivity in the case where the sheet passing speed is lower than 5 mpm and because it is difficult to stably control the coating weight in the case where the sheet passing speed is higher than 150 mpm.

Examples of a treatment before the Fe-based electroplating treatment is performed include a degreasing treatment and rinsing in water to clean the surface of a high-strength cold rolled steel sheet before annealing and a pickling treatment and rinsing in water to activate the surface of a high-strength cold rolled steel sheet before annealing. Following such pretreatments, the Fe-based electroplating treatment is performed. There is no particular limitation on the method used for degreasing treatment and rinsing in water, and examples of a method which may be used include an electrolytic degreasing method utilizing sodium orthosilicate solution, sodium hydroxide solution, or the like. In the pickling treatment, various kinds of acid such as sulfuric acid, hydrochloric acid, and nitric acid or a mixture thereof may be used. In particular, it is preferable that any one of sulfuric acid and hydrochloric acid or a mixture thereof be used. Although there is no particular limitation on the concentration of the acid, it is preferable that the concentration of the acid be 1 to 20 mass% in consideration of removal capability of an oxide film, inhibition of a rough surface (surface defects) due to excessive pickling, and the like. In addition, a pickling treatment solution may contain a defoaming agent, a pickling accelerator, a pickling inhibitor, and the like.

Subsequently, after the Fe-based electroplating treatment described above has been performed, the Fe-based electroplated steel sheet before annealing is subjected to an annealing process in which, after the steel sheet has been held in a reducing atmosphere having a dew point of - 30°C or lower and a hydrogen concentration of 1.0 volume% or more and 30.0 volume% or less at a temperature of 650°C or higher and 900°C or lower for 30 seconds or more and 600 seconds or less, the steel sheet is cooled to obtain an Fe-based electroplated steel sheet. It is preferable that the annealing process be performed to remove strain generated in a rolling process from the Fe-based electroplated steel sheet before annealing and to recrystallize the microstructure, thereby increasing the strength of the steel sheet.

[Projection welding method]

Hereafter, the projection welding method for manufacturing the welded joint according to the present invention having the weld described above will be described.

It is possible to manufacture the welded joint according to the present invention by performing projection welding, that is, by performing resistance welding, in which the high-strength coated steel sheet having the chemical composition described above and the nut are clamped between a pair of electrodes and energized while being pressurized so as to be joined.

For example, first, the high-strength coated steel sheet 2 and the projection parts 3 of the nut 1 are arranged so as to face each other as illustrated in Fig. 5. Subsequently, the high-strength coated steel sheet 2 and the nut 1 are clamped between a pair consisting of an electrode disposed above these and an electrode disposed below these and energized under control for realizing predetermined welding conditions while being pressurized. Consequently, it is possible to manufacture the welded joint 10 having the weld 6 described above by joining the contact surface between the high-strength coated steel sheet 2 and the nut 1 (refer to Fig. 1 to Fig. 4). Subsequently, another steel sheet is fixed by a bolt to the screw hole of the nut of the welded joint. Here, the high-strength coated steel sheet 2 may be arranged so that the surface having the coated layer faces the projection parts 3 of the nut 1.

Hereafter, the welding conditions according to the present invention will be described.

[Main energizing process]

The present invention includes a main energizing process, in which a weld (that is, a nugget or a joint interface (joint region having a lump shape or a film shape)) is formed by performing resistance welding, in which the high-strength coated steel sheet and the nut are clamped between the pair of electrodes described above and energized while being pressurized, to melt a contact surface between the high-strength coated steel sheet and the nut. In the main energizing process, control is performed so that an average welding current Iw (kA) and an energizing time Tw (s) satisfy relational expression (1) in the resistance welding.

$$5 \leq Iw \leq 2.2/Tw \quad \cdots \quad (1)$$

In the case where the average welding current Iw of the resistance welding in the main energizing process is less than 5 kA, since there is insufficient heat input, it is not possible to form a sufficiently strong joint interface or a nugget, which results in a decrease in peeling strength. Therefore, the average welding current Iw is set to be 5 kA or more. It is preferable that the average welding current Iw be 5.0 kA or more or more preferably 5.5 kA or more.

In addition, in the present invention, from the viewpoint of heat input and the area of the contact surface, the relationship between the average welding current Iw and the energizing time Tw is also specified. In the case where the average welding current Iw is more than the value calculated by using the expression (2.2/Tw) which is defined in relation to the energizing time Tw, there is an excessive increase in heat input. As a result, since a strong joint interface or a nugget is formed on the entire contact surface between the nut and the high-strength coated steel sheet, there is a decrease in delayed fracture resistance. In addition, since a strong joint interface or a nugget is formed on a wide range of the contact surface, there is a risk in that the softened layer described above is not appropriately formed on the outermost periphery or innermost periphery of the weld 6. Therefore, the average welding current Iw is set to be equal to or less than the value calculated by using the expression (2.2/Tw). It is preferable that the average welding current Iw be 17 kA or less.

There is no particular limitation on the energizing time Tw (s) of the resistance welding in the main energizing process. However, in the case where the energizing time Tw is 0.44 s or more, there is an increase in manufacturing costs. Therefore, it is preferable that the energizing time Tw be 0.44 s or less. It is more preferable that the energizing time Tw be 0.20 s or less or even more preferably 0.11 s or less. To appropriately form the weld described above, it is preferable that the energizing time Tw be 0.01 s or more or more preferably 0.02 s or more.

In the present invention, after the main energizing process described above has been performed, the post-energization (post-energizing process) described below may be performed. In the case where the post-energizing process is performed, it is preferable that control be performed under the conditions described below.

[Post-energizing process]

The post-energizing process includes a cooling step in which cooling is performed for a cooling time of 0.02 s or more after the main energizing process has been performed and an energizing step following the cooling step in which an average welding current Iw2 (kA) and an energizing time Tw2 (s) satisfy relational expression (2) and relational expression (3) in resistance welding.

$$0 < Iw2 \leq 0.5/Tw2 \cdots (2)$$

$$Iw2 < Iw \cdots (3)$$

Here, in relational expression (2) and relational expression (3), Iw denotes the average welding current (kA) in the main energizing process, Iw2 denotes the average welding current (kA) in the post-energizing process, and Tw2 denotes the energizing time (s) in the post-energizing process.

[Cooling step]

In the case where the cooling time after the main energizing process is less than 0.02 s, there is an insufficient amount of martensite transformation in the weld. As a result, since a strong joint interface or a nugget is formed on the entire contact surface between the nut and the high-strength coated steel sheet, there is a decrease in delayed fracture resistance. Therefore, the cooling time described above in the cooling step is set to be 0.02 s or more. It is preferable that the cooling time be 0.03 s or more.
Here, there is no particular limitation on the upper limit of the cooling time described above in the cooling step. From the viewpoint of manufacturing costs, it is preferable that the cooling time described above be 2.0 s or less or more preferably 1.8 s or less.

[Energizing step]

In this energizing step, the resistance welding conditions are controlled so that the average welding current Iw2 (kA) and the energizing time Tw2 (s) satisfy relational expression (2) and relational expression (3) in resistance welding.
As indicated in relational expression (2), it is preferable that the average welding current Iw2 (kA) in the resistance welding in the post-energizing process be more than 0 kA. In the case where the post-energizing process is performed and the average welding current Iw2 is 0 kA, since there is insufficient tempering occurring in martensite transformation microstructure of the weld, there is no improvement in delayed fracture resistance. It is more preferable that the average welding current Iw2 be equal to or more than (0.1/Tw2) kA or even more preferably equal to or more than (0.15/tw2) kA.
On the other hand, as indicated in relational expression (2), in the case where the average welding current Iw2 (kA) in the resistance welding in the post-energizing process is more than the value calculated by using the expression (0.5/Tw2) which is defined in relation to the energizing time Tw2, the weld is remelted. As a result, since a strong joint interface or a nugget is formed on the entire contact surface between the nut and the high-strength coated steel sheet, there is a decrease in delayed fracture resistance. In addition, since a strong joint interface or a nugget is formed on a wide range of the contact surface, there is a risk in that the softened layer described above is not appropriately formed on the outermost periphery or innermost periphery of the weld 6. Therefore, the average welding current Iw2 (kA) is set to be equal to or less than the value calculated by using the expression (0.5/Tw2). It is preferable that the average welding current Iw2 (kA) be equal to or less than (0.45/Tw2) kA.
In addition, as indicated in relational expression (3), also in the case where the average welding current Iw2 (kA) is equal to or more than the average welding current Iw (kA) in the main energizing process, since a strong joint interface or a nugget is formed on the entirety of the contact surface described above for the same reason as described above, there is a decrease in delayed fracture resistance. In addition, there is a risk in that the softened layer described above is not appropriately formed on the outermost periphery or innermost periphery of the weld 6.
There is no particular limitation on the energizing time Tw2 (s) in the resistance welding in the post-energizing process. However, in the case where the energizing time Tw2 is 0.40 s or more, there is an increase in manufacturing costs. Therefore, it is preferable that the energizing time Tw2 be less than 0.40 s. It is more preferable that the energizing time Tw2 be 0.30 s or less. To appropriately form the weld described above, it is preferable that the energizing time Tw2 be 0.01 s or more or more preferably 0.02 s or more.

In the present invention, in the case of any one of the projection welding methods described above, it is preferable that the welding pressure F (kN) be 1.5 kN to 7.0 kN. In the case where the welding pressure F is excessively large, since there is an increase in energizing diameter, it tends to be difficult to ensure nugget diameter. On the other hand, in the case where the welding pressure F is excessively small, since there is a decrease in energizing diameter, expulsion and surface flash tend to occur. Therefore, it is preferable that the welding pressure F be within the preferable range described above. Here, the welding pressure may be limited by the equipment capacity. However, as long as it is possible to achieve a necessary nugget diameter, the welding pressure F in the main energizing process may be out of the preferable range described above.

As described above, according to the present invention, it is possible to achieve not only excellent peeling strength but also excellent delayed fracture resistance. Specifically, as described above, after an M6 nut has been joined with a steel sheet by performing projection welding, the peeling strength (FL) of the nut and the coated steel sheet is 7.0 kN or higher, and peeling does not occur between the nut and the coated steel sheet even in the case where the projection welded joint is immersed in a hydrochloric acid solution at room temperature with a load of $(0.85 \times$ FL) or $(0.65 \times$ FL) being applied via a bolt. That is, it is possible to stably obtain a welded joint having excellent peeling strength and delayed fracture resistance after projection welding has been performed on the nut.

EXAMPLES

Hereafter, the examples of the present invention will be described. Here, the present invention is not limited by the examples described below, and the present invention may be performed by appropriately making alterations within a range in accordance with the intent of the present invention. Working examples performed in such a way are all within the technical scope of the present invention.

Molten steels having the chemical compositions given in Table 1 were prepared and made into slabs by using a continuous casting method. The symbol "-" in Table 1 denotes that the relevant element is not intentionally added, which means that the content of the element is 0% or that the element is contained as an incidental impurity.

After the slab described above had been heated, the heated slab was subjected to hot rolling with a finishing delivery temperature of 900°C so as to be made into a hot rolled steel sheet, the hot rolled steel sheet was cooled to a cooling stop temperature of 500°C, and the cooled steel sheet was coiled at a coiling temperature of 500°C. After the obtained hot rolled steel sheet had been subjected to pickling, the pickled steel sheet was subjected to cold rolling so as to be made into a cold rolled steel sheet (having a thickness of 1.4 mm).

Subsequently, by using a continuous hot-dip galvanizing line (CGL), one part of the obtained cold rolled steel sheet was subjected to a hot-dip galvanizing treatment in a hot-dip galvanizing bath containing Al, Zn, and incidental impurities under the conditions of an Al content in the bath of 0.14% and a bath temperature of 460°C so as to be made into a hot-dip galvanized steel sheet (GI).

The other part of the cold rolled steel sheet which passed the CGL was further subjected to an alloying treatment at a temperature of 550°C after the hot-dip galvanizing treatment described above had been performed so as to be made into a hot-dip galvannealed steel sheet (GA). The coating weight per side of the galvanized layer was 25 to 80 g/m².

The high-strength coated steel sheets (GA and GI), with exception of No. 7 given in Table 2, were subjected to an Fe-based precoating treatment (Fe-based electroplating treatment) on both sides and then annealing before hot-dip galvanizing treatment was performed. The expression "Fe" in the column "Precoated Layer" in Table 2 denotes a case of a Fe-based precoated layer. The coating weight per side of the Fe-based precoated layer was set to be equal to the value given in the column "Precoated Layer Thickness" in Table 2. The precoated layer thickness was determined by using the method used when determining the "thickness of the Fe-based electroplated layer" described above.

The tensile strength (TS) of the base steel sheet of each of the obtained high-strength coated steel sheets (GA and GI) was determined. A JIS NO. 5 test piece for a tensile test was taken from each of the steel sheets so that the tensile direction was perpendicular to the rolling direction, and the tensile strength was determined by performing a tensile test (JIS Z 2241:1998). The determination results are given in Table 1.

In addition, the volume fraction of retained austenite in the base steel sheet was determined by using the following method.

The volume fraction of retained austenite was determined by polishing the steel sheet (base steel sheet) to expose a surface located at 1/4 of the thickness of the steel sheet and by the X-ray diffraction intensities of the exposed surface. The integrated diffraction intensities of the {200}-plane, {211}-plane, and {220}-plane of the ferrite of iron and the {200}-plane, {220}-plane, and {311}-plane of the austenite of iron were determined by means of the K$\alpha$ ray of Mo as a radiation source with an acceleration voltage of 50 keV in X-ray diffractometry (apparatus: RINT-2200 manufactured by Rigaku Corporation). By using the values obtained as described above and the calculating formula described in "X-ray Diffraction Handbook" published by Rigaku Corporation (2000), pp. 26 and 62-64, the volume fraction of retained austenite was determined. The obtained volume fractions (%) are given in Table 1.

A test piece for a steel sheet having a size of 50 mm × 150 mm was taken from each of the coated steel sheets (GA and GI) manufactured as described above, and a hole having a diameter of 7 mm was formed at the center of the test piece for a steel sheet. In addition, an M6 nut for welding having three projection parts was prepared, the test piece for a steel sheet and the nut were set on an alternating-current welding machine so that the center of the hole of the test piece for a steel sheet and the center of the hole of the nut were concentric, and projection welding was performed under the welding conditions given in Table 2 to manufacture a test piece (welded body) having a projection weld. The steel grade of the M6 nut for welding was SCM435 (JIS G 4053). The projection parts were arranged at three points at regular intervals along the outer periphery of the circular seating surface, and each projection part had a frustum shape having a sector-shaped bottom surface enclosed by two straight lines orthogonal to each other having an identical length and a circular arc having a radius of curvature of 7 mm along the outer periphery of the seating surface (refer to Fig. 5).

The welding machine used was a resistance welding machine of a single-phase alternating-current type (50 Hz) having a welding gun with a servomotor pressurizing system. A pair of electrode chips used were flat-type electrodes having a diameter of 30 mm. Here, in the case of some of the test pieces (welded bodies), a post-energizing process was performed after a main energizing process under the conditions given in Table 2.

For the obtained welded body (welded joint), the content of solid solution Mn in weld, the tensile strength and the delayed fracture resistance of the welded joint were determined by using the methods described below.

<Method for evaluating content of solid solution Mn in weld>

The obtained welded joint was cut along a cross section in the thickness direction to prepare a test piece for observation.

As illustrated in Fig. 1 and Fig. 4, a position at a joint interface on an outermost periphery of a weld was defined as a point A, a central position in the thickness direction of the high-strength coated steel sheet on the outermost periphery of the weld was defined as a point B, a position at a joint interface on an innermost periphery of the weld was defined as a point C, a central position in the thickness direction of the high-strength coated steel sheet on the innermost periphery of the weld was defined as a point D. In addition, a first region to a fourth region were defined as described above.

The content (mass%) of solid solution Mn in the first region to fourth region was determined by using an FE-EPMA. By performing X-ray spectrometry for various elements in a region from the surface of the steel sheet to the center in the thickness direction (position located at 1/2 of the thickness), the contents (mass%) of the elements were obtained. Subsequently, the ratio of the content of solid solution Mn on the outermost periphery of the weld and the ratio of the content of solid solution Mn on the innermost periphery of the weld were calculated.

Specifically, as the ratio of the content of solid solution Mn on the outermost periphery of the weld, the ratio of the content of solid solution Mn in the surface layer of the steel sheet (first region) to the content of solid solution Mn in the central portion in the thickness direction of the steel sheet (second region) (that is, (content of solid solution Mn in the first region)/ (content of solid solution Mn in the second region)) was calculated. The calculated values are given in the column "Outermost Periphery" in the column "Ratio of Solid Solution Mn in Weld" in Table 3. As the ratio of the content of solid solution Mn on the innermost periphery of the weld, (content of solid solution Mn in the third region)/ (content of solid solution Mn in the fourth region) was calculated, and the calculated values are given in the column "Innermost Periphery" in the column "Ratio of Solid Solution Mn in Weld" in Table 3.

<Evaluation of peeling strength of welded joint>

The evaluation of peeling strength was performed on the basis of an indentation peeling test in accordance with JIS B 1196:2001. After having fixed a bolt to the screw hole of the nut of the welded joint described above to prepare a bolt fixation test piece, the indentation peeling test was performed, and the load with which the nut separated from the steel sheet was determined. This determined value was defined as the peeling strength (FL). The obtained peeling strengths (FL) are given in Table 3. In Table 3, a case of a peeling strength of 7.0 kN or higher was judged as "pass (denoted by the symbol "o" in Table 3)", and a case of a peeling strength of less than 7.0 kN was judged as "fail (denoted by the symbol "×" in Table 3)". Here, the welded joint judged as pass was evaluated as a welded joint having "excellent peeling strength".

<Evaluation of delayed fracture resistance of welded joint>

The delayed fracture resistance was evaluated by using the following method.

A test piece was prepared by fixing a bolt to the screw hole of the nut of the welded joint described above. One of the test pieces with the fixed bolt was subjected to a load of (0.85 × FL) on the basis of the peeling strength FL described above. In addition, the other test piece was subjected to a load of (0.65 × FL) on the basis of the peeling strength FL described above. Subsequently, after having immersed these test pieces with the fixed bolt in a hydrochloric acid solution (pH = 1.0) at room temperature (25°C), whether or not peeling occurred between the nut and the coated steel sheet was judged. A case where peeling did not occur for 100 hours or more in the test under a load of (0.85 × FL) or the test under a load of (0.65 × FL) was judged as "excellent (denoted by the symbol "◎" in table 3)" in terms of delayed fracture resistance, a case where peeling occurred before 100 hours elapsed in one of the test under a load of (0.85 × FL) and the test under a load of (0.65 × FL) was judged as "good (denoted by the symbol "o" in table 3)" in terms of delayed fracture resistance, and a case where peeling occurred before 100 hours elapsed in both of the test under a load of (0.85 × FL) and the test under a load of (0.65 × FL) was judged as "poor (denoted by the symbol "×" in Table 3)" in terms of delayed fracture resistance. Here, the welded joint judged as "excellent" or "good" was evaluated as a welded joint having "excellent delayed fracture resistance".

[Table 1]

| Steel Grade | Chemical Composition (mass%) | | | | | | | | Steel Microstructure | Tensile Strength TS (MPa) | Note |
|---|---|---|---|---|---|---|---|---|---|---|---|
| | C | Si | Mn | P | S | Al | N | Others | Retained Austenite (volume%) | | |
| A | 0.17 | 1.44 | 2.78 | 0.01 | 0.001 | 0.03 | 0.002 | - | 8 | 1022 | Example Steel |
| B | 0.11 | 2.15 | 3.77 | 0.01 | 0.001 | 0.02 | 0.003 | Sb: 0.008, Ti: 0.02, B: 0.0015 | 16 | 1211 | Example Steel |
| C | 0.22 | 0.89 | 2.09 | 0.02 | 0.002 | 0.03 | 0.002 | V: 0.04, Cu: 0.10, Ni: 0.18 | 5 | 1450 | Example Steel |
| D | 0.10 | 1.34 | 2.92 | 0.01 | 0.001 | 0.03 | 0.003 | Cr: 0.22, Ca: 0.003, REM: 0.002 | 7 | 833 | Example Steel |
| E | 0.33 | 1.09 | 2.15 | 0.01 | 0.002 | 0.88 | 0.005 | Mo: 0.21, Nb: 0.03 | 15 | 1501 | Example Steel |
| F | 0.15 | 1.56 | 4.95 | 0.01 | 0.001 | 0.03 | 0.003 | - | 13 | 1266 | Comparative Steel |

[Table 2]

| No. | Steel Grade | Surface of Steel Sheet | | | Energizing Process | | | | | Note |
|---|---|---|---|---|---|---|---|---|---|---|
| | | Kind of Coated Layer | Precoated Layer | Precoated Layer Thickness (g/m²) | Main Energizing Process | | Post-energizing Process | | | |
| | | | | | Average Welding Current Iw (kA) | Energizing Time Tw (s) | Cooling Step Cooling Time (s) | Energizing Step Average Welding Current Iw2 (kA) | Energizing Time Tw2 (s) | |
| 1 | A | GA | Fe | 5 | 11.0 | 0.10 | - | - | - | Example |
| 2 | B | GA | Fe | 2 | 12.0 | 0.08 | - | - | - | Example |
| 3 | C | GA | Fe | 25 | 12.0 | 0.04 | 0.04 | 8.0 | 0.04 | Example |
| 4 | D | GA | Fe | 13 | 12.0 | 0.06 | - | - | - | Example |
| 5 | E | GA | Fe | 2 | 12.0 | 0.18 | 0.06 | 7.0 | 0.06 | Example |
| 6 | A | GI | Fe | 1 | 16.0 | 0.10 | - | - | - | Example |
| 7 | B | GA | - | - | 11.0 | 0.10 | - | - | - | Comparative Example |
| 8 | F | GA | Fe | 5 | 12.0 | 0.08 | - | - | - | Comparative Example |
| 9 | D | GA | Fe | 5 | 4.5 | 0.20 | - | - | - | Comparative Example |
| 10 | B | GA | Fe | 5 | 8.0 | 0.30 | - | - | - | Comparative Example |
| 11 | A | GA | Fe | 5 | 11.0 | 0.10 | 0.04 | 7.0 | 0.08 | Comparative Example |
| 12 | B | GA | Fe | 5 | 11.0 | 0.10 | 0.04 | 11.5 | 0.04 | Comparative Example |
| 13 | C | GA | Fe | 25 | 12.0 | 0.04 | 0.04 | 8.0 | 0.04 | Example |
| 14 | D | GA | Fe | 13 | 12.0 | 0.06 | - | - | - | Example |
| 15 | E | GA | Fe | 2 | 12.0 | 0.18 | 0.06 | 7.0 | 0.06 | Example |
| 16 | A | GI | Fe | 1 | 16.0 | 0.10 | - | - | - | Example |

| No. | Steel Grade | Surface of Steel Sheet | | | Energizing Process | | | | | Note |
|---|---|---|---|---|---|---|---|---|---|---|
| | | | | | Main Energizing Process | | Post-energizing Process | | | |
| | | | | | | | Cooling Step | Energizing Step | | |
| | | Kind of Coated Layer | Precoated Layer | Precoated Layer Thickness (g/m²) | Average Welding Current Iw (kA) | Energizing Time Tw (s) | Cooling Time (s) | Average Welding Current Iw2 (kA) | Energizing Time Tw2 (s) | |
| 17 | A | GA | Fe | 1 | 5.0 | 0.44 | - | - | - | Example |

*1: GI; hot-dip galvanized steel sheet, GA; hot-dip galvannealed steel sheet

[Table 3]

| No. | Ratio of Solid Solution Mn in Weld | | Evaluation Result | | | | | Note |
|---|---|---|---|---|---|---|---|---|
| | Outermost Periphery (%) | Innermost Periphery (%) | Peeling Strength | | Delayed Fracture Resistance | | | |
| | | | Peeling Strength FL (kN) | Evaluation | Time until Peeling Occurred under a Load of (0.65 × FL) (h) | Time until Peeling Occurred under a Load of (0.85 × FL) (h) | Evaluation | |
| 1 | 15 | 16 | 11 | ○ | ≥100 | ≥100 | ◎ | Example |
| 2 | 16 | 18 | 12 | ○ | ≥100 | 96 | ○ | Example |
| 3 | 32 | 28 | 9 | ○ | ≥100 | ≥100 | ◎ | Example |
| 4 | 22 | 36 | 10 | ○ | ≥100 | 97 | ○ | Example |
| 5 | 21 | 19 | 12 | ○ | ≥100 | ≥100 | ◎ | Example |
| 6 | 11 | 8 | 13 | ○ | ≥100 | 98 | ○ | Example |
| 7 | 95 | 98 | 10 | ○ | 35 | 18 | × | Comparative Example |
| 8 | 43 | 45 | 11 | ○ | 28 | 20 | × | Comparative Example |
| 9 | 41 | 17 | 5 | × | ≥100 | ≥100 | ◎ | Comparative Example |
| 10 | 49 | 52 | 12 | ○ | 40 | 25 | × | Comparative Example |
| 11 | 56 | 58 | 11 | ○ | 55 | 40 | × | Comparative Example |
| 12 | 58 | 54 | 10 | ○ | 67 | 41 | × | Comparative Example |
| 13 | 32 | 28 | 9 | ○ | ≥100 | ≥100 | ◎ | Example |
| 14 | 22 | 36 | 10 | ○ | ≥100 | 97 | ○ | Example |
| 15 | 21 | 19 | 12 | ○ | ≥100 | ≥100 | ◎ | Example |
| 16 | 11 | 8 | 13 | ○ | ≥100 | 98 | ○ | Example |
| 17 | 26 | 28 | 11 | ○ | ≥100 | 96 | ○ | Example |

As Tables 2 and 3 indicate, it is clarified that examples of the present invention were good welded joints having not only excellent peeling strength but also excellent delayed fracture resistance. In contrast, in the case of the comparative examples, a good welded joint was not obtained.

Reference Signs List

| | |
|---|---|
| 1 | nut |
| 2 | high-strength coated steel sheet |
| 3 | projection part |
| 4 | nugget |
| 5 | strong joint interface |
| 6 | projection weld |
| 6a | outermost periphery of weld |
| 6b | innermost periphery of weld |
| 7a | first region |
| 7b | second region |
| 7c | third region |
| 7d | fourth region |
| 8 | central portion in thickness direction |
| 10 | projection welded joint |

**Claims**

1. A projection welded joint, the welded joint being formed by performing projection welding on a high-strength coated steel sheet and a nut,

   wherein, when a position at a joint interface on an outermost periphery of a weld is defined as a point A, a central position in a thickness direction of the high-strength coated steel sheet on the outermost periphery of the weld is defined as a point B, a position at a joint interface on an innermost periphery of the weld is defined as a point C, a central position in the thickness direction of the high-strength coated steel sheet on the innermost periphery of the weld is defined as a point D,
   a region within 50 um from the point A toward a center of the weld along the joint interface and within 5 um from the point A in the thickness direction is defined as a first region,
   a region within 50 um from the point B toward the center of the weld in a direction parallel to the joint interface and within 5 um from the point B in the thickness direction is defined as a second region,
   a region within 50 um from the point C toward the center of the weld along the joint interface and within 5 um from the point C in the thickness direction is defined as a third region, and
   a region within 50 $\mu$m from the point D toward the center of the weld in a direction parallel to the joint interface and within 5 $\mu$m from the point D in the thickness direction is defined as a fourth region,
   a content of solid solution Mn in the first region is 40% or less of a content of solid solution Mn in the second region, and a content of solid solution Mn in the third region is 40% or less of a content of solid solution Mn in the fourth region,
   wherein the high-strength coated steel sheet has a chemical composition containing, by mass%,
   C: 0.10% to 0.40%,
   Si: 0.8% to 2.5%,
   Mn: 2.0% to 4.0%,
   P: 0.05% or less,
   S: 0.004% or less,
   Al: 0.01% to 1.00%,
   N: 0.010% or less, and
   a balance of Fe and incidental impurities, and
   wherein a precoated layer is provided as a base layer between a coated layer and a base steel sheet of the high-strength coated steel sheet.

2. The projection welded joint according to Claim 1,

wherein the high-strength coated steel sheet has the chemical composition further containing, by mass%, one, two,
or more selected from
Nb: 0.050% or less,
Ti: 0.050% or less,
V: 0.05% or less,
Cr: 1.0% or less,
Mo: 0.50% or less,
Cu: 0.50% or less,
Ni: 0.50% or less,
Sb: 0.020% or less,
B: 0.010% or less,
Ca: 0.0050% or less, and
REM: 0.0050% or less.

3. The projection welded joint according to Claim 1 or 2, wherein the coated layer of the high-strength coated steel sheet is a hot-dip galvanized layer or a hot-dip galvannealed layer.

4. The projection welded joint according to any one of Claims 1 to 3, wherein the precoated layer of the high-strength coated steel sheet is an Fe-based electroplated layer having a coating weight per side of 0.5 $g/m^2$ or more.

5. The projection welded joint according to any one of Claims 1 to 4, wherein a tensile strength of the high-strength coated steel sheet is 780 MPa or higher.

6. A projection welding method for the projection welded joint according to any one of Claims 1 to 5, the projection welding method comprising a main energizing process,

wherein, when the high-strength coated steel sheet and the nut are clamped between a pair of electrodes and energized while being pressurized so as to be joined by performing resistance welding,
an average welding current Iw (kA) and an energizing time Tw (s) of the resistance welding satisfy relational expression (1):

$$5 \leq Iw \leq 2.2/Tw \quad \cdots \quad (1)$$

7. The projection welding method according to Claim 6, the method further comprising a post-energizing process following the main energizing process,

wherein the post-energizing process includes
a cooling step in which cooling is performed for a cooling time of 0.02 s or more after the main energizing process and
an energizing step following the cooling step in which an average welding current Iw2 (kA) and an energizing time Tw2 (s) of the resistance welding satisfy relational expression (2) and relational expression (3):

$$0 < Iw2 \leq 0.5/Tw2 \quad \cdots \quad (2)$$

$$Iw2 < Iw \quad \cdots \quad (3)$$

where, in relational expression (2) and relational expression (3), Iw denotes the average welding current (kA) in the main energizing process, Iw2 denotes the average welding current (kA) in the post-energizing process, and Tw2 denotes the energizing time (s) in the post-energizing process.

# FIG. 1

PORTION A

1

4

4

6

10

2

# FIG. 2

(ENLARGED VIEW OF PORTION A)

1

1a

4

1b

A

7a

C

7c

7b

B

7d

D

6a

6

6b

8

2

FIG. 3

PORTION B

1

5      5

6

10

2

FIG. 4

(ENLARGED VIEW OF PORTION B)

1

1a

1b

A          5          C

7a                    7c

7b                    7d

B                    D

6a         6         6b

8

2

FIG. 5

<div align="center">**INTERNATIONAL SEARCH REPORT**</div>

| | International application No. |
|---|---|
| | **PCT/JP2022/043505** |

**A.    CLASSIFICATION OF SUBJECT MATTER**

*B23K 11/14*(2006.01)i; *C22C 38/00*(2006.01)i; *C22C 38/06*(2006.01)i; *C22C 38/60*(2006.01)i; *C23C 2/02*(2006.01)i; *C23C 2/06*(2006.01)i; *C23C 2/40*(2006.01)i; *C23C 28/02*(2006.01)i; *C25D 5/48*(2006.01)i

FI:    B23K11/14 310; C22C38/00 301T; C22C38/06; C22C38/60; C23C2/06; C23C2/02; C23C2/40; C23C28/02; C25D5/48

According to International Patent Classification (IPC) or to both national classification and IPC

**B.    FIELDS SEARCHED**

Minimum documentation searched (classification system followed by classification symbols)

B23K11/14; C22C38/00; C22C38/06; C22C38/60; C23C2/02; C23C2/06; C23C2/40; C23C28/02; C25D5/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2021/261479 A1 (JFE STEEL CORP) 30 December 2021 (2021-12-30)<br>entire text, all drawings | 1-7 |
| A | JP 2013-078784 A (NIPPON STEEL & SUMITOMO METAL CORP) 02 May 2013 (2013-05-02)<br>entire text, all drawings | 1-7 |
| A | WO 2008/062650 A1 (NIPPON STEEL & SUMIKIN STAINLESS STEEL CORPORATION) 29 May 2008 (2008-05-29)<br>entire text, all drawings | 1-7 |

☐ Further documents are listed in the continuation of Box C.        ☑ See patent family annex.

| | |
|---|---|
| *        Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **23 January 2023** | **07 February 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/043505**

| Patent document cited in search report | | | Publication date (day/month/year) | Patent family member(s) | | | Publication date (day/month/year) |
|---|---|---|---|---|---|---|---|
| WO | 2021/261479 | A1 | 30 December 2021 | (Family: none) | | | |
| JP | 2013-078784 | A | 02 May 2013 | (Family: none) | | | |
| WO | 2008/062650 | A1 | 29 May 2008 | US entire text, all drawings CN KR | 2009/0053551 101395293 10-2008-0102380 | A1 A A | |

Form PCT/ISA/210 (patent family annex) (January 2015)

**EP 4 431 217 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5708350 B

- JP 2010115678 A

**Non-patent literature cited in the description**

- **RIGAKU CORPORATION.** X-ray Diffraction Handbook. 2000, 26, , 62-64